# EUROPEAN PATENT APPLICATION

(11) **EP 2 019 239 A1**
(43) Date of publication of application: **28.01.2009**
(21) Application number: 08252252.5
(22) Date of filing: 02.07.2008
(51) Int. Cl.: F16K 1/36, F16K 1/54

(54) **A plug for a fluid control valve**

(30) Priority: 02.07.2007 GB 0712786
(71) Applicant: CRANE LIMITED, Ipswich, Suffolk, IP3 9QH (GB)
(72) Inventor: Caccavale, Anthony, Maldon, Essex CM9 4QT (GB); Bungard, John, Bacton, Suffolk IP14 4LN (GB)
(74) Representative: Spencer, Michael David

(57) **Abstract**

A plug for a fluid control valve comprising a main portion of substantially constant cross-section, means for attachment to a valve stem, in which the plug further comprises at least one slot formed in the outside surface of the main portion.

## Description

The present invention relates to a plug and valve seat combination for a fluid control valve.

Previously proposed plugs for fluid control valves comprise a stem portion of constant cross-section and a curved hemispherical or oblate hemispherical end portion. The shape of the end portion determines the control characteristics of the valve.

Valves with equal percentage characteristics, where the percentage flow relates directly to the percentage that the valve is opened by, are highly desirable for ease of use, especially in the field of heat exchangers to match the characteristics of the heat exchanger.

It has been difficult to design a curved plug which exhibits "equal percentage" characteristics as small changes in the shape of the curved profile can alter the characteristics of the valve significantly. Achieving consistency between plugs made to the same design is also difficult because small variations in the plug cause significant variations in the control characteristics of the valve.

It is an aim of the present invention to produce a valve with more predictable characteristics and which exhibits substantially equal percentage characteristics.

Accordingly the present invention is directed to a plug for a fluid control valve comprising a main portion of substantially constant cross-section, means for attachment to a valve stem, in which the plug further comprises at least one slot formed in the outside surface of the main portion.

The slot or slots formed in the surface of the main section defines the fluid control characteristics of the valve by interacting with the parallel hole in the valve seat. The size, shape and number of slots can be varied according to the desired characteristics of the valve. Such slots can easily be cut, machined or moulded into the plug using a cutter or rotary drill. It will be appreciated that a good precision can be obtained by such methods.

Advantageously the intended bottom end of the plug has a chamfered portion. This chamfered region can also have the slots extending through it for further control of the flow characteristics.

The chamfered portion enables the plug to releasably engage with the parallel bore of the valve seat.

Preferably, the plug comprises three such slots in its surface. These are advantageously equally spaced round the outside of the plug, with for instance smaller valves.

Experiments with differing numbers of slots have determined that a plug with three slots exhibits the desired substantially equal percentage characteristics. It will occur to the skilled person that a plug with fewer or more slots can be designed to exhibit similar characteristics and those plugs will also fall within the scope of this application.

Advantageously, the plug comprises a main portion of approximately 4mm in length.

The advantage of this feature is that it offers good flow control characteristics over short stroke lengths of 5mm or less (a stroke is the length over which a valve moves between being fully open and fully closed).

Previously proposed plugs require larger strokes. A valve comprising a shorter stroke can be proportionately smaller, allowing the valve to be used in a wider range of applications. Furthermore less material is required for the plug.

An example of a plug made in accordance with the present invention will now be described herein below with reference to and as shown in the accompanying drawings, in which:
Figure 1 shows a perspective view of the plug;
Figure 2 shows a perspective sectional view of a valve equipped with the plug shown in Figure 1; and
Figure 3 shows a graph of the flow performance of the valve using the plug shown in Figure 1.

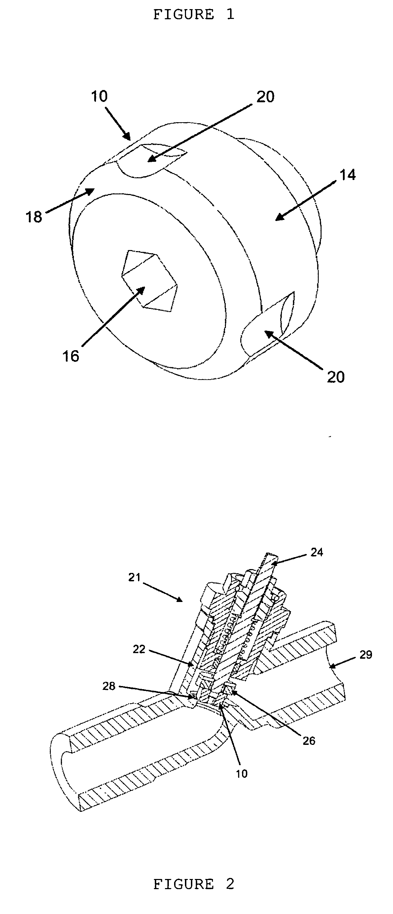

Figure 1 shows a plug 10 of substantially circular cross-section comprising a main portion 14, a hexagonal slot 16 for securing the plug 10 onto a valve stem 24, a chamfered portion 18 and three slots 20 (two visible). The hexagonal slot is used to rotate the plug 10 onto the valve stem 24 using an internal screw thread (not shown) at the other end of the plug 10.

Figure 2 shows a balancing valve 21 equipped with the plug 10 shown in Figure 1 comprising a valve body 22, a valve stem 24, a rubber seal 26 and a valve seat 28 in which the valve plug 10 is inserted into the valve seat 28. The plug is attached by means of the stem 24 to the rubber seal 26 and thence to the valve body 22. In use the stem 24 moves the plug 10 to and fro through the valve seat or orifice 28. When the valve 21 is fully closed the rubber seal 26 rests against the valve seat 28. On opening the plug 10 is moved through the valve seat 28. At a certain point the slots 20 are uncovered and fluid flow will commence. As more of the slots 20 are uncovered the flow rate will increase, until the chamfered portion 18 is reached when the flow will increase substantially. Eventually the valve 21 will be fully open. It will be appreciated that this arrangement allows for a substantial degree of control.

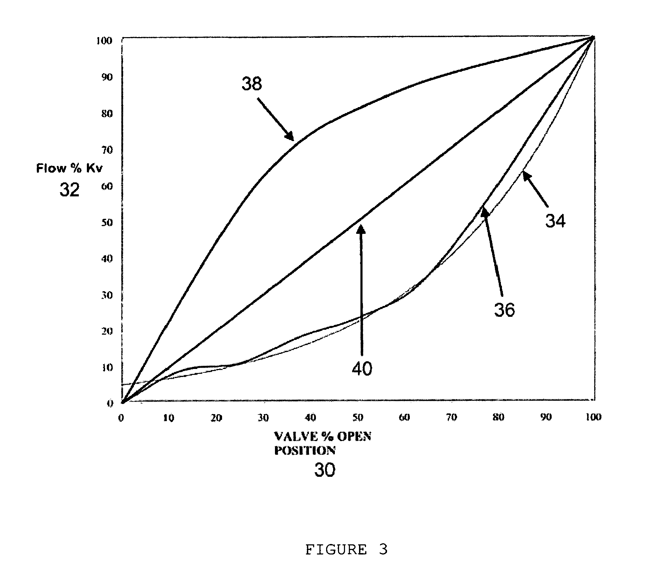

Figure 3 shows a graph of the valve opened percentage 30 against the flow percentage 32, wherein the ideal equal percentage characteristics 34 are compared with the characteristics of a valve including the plug of the present invention 36, the heat exchanger characteristics 38 and the resultant thermal capacity 40 of the valve.

The flow through the preferred valve arrangement is controlled by adjusting the position of the valve stem 24 which inserts and removes the plug 10 into or from the valve seat 28.

The slots 20 in the valve plug 10 are variable in shape and size by design and therefore the flow characteristics through the valve are configurable.

## Claims

1. A plug for a fluid control valve comprising a main portion of substantially constant cross-section, means for attachment to a valve stem, in which the plug further comprises at least one slot formed in the outside surface of the main portion.

2. A plug according to Claim 1 wherein an intended bottom end of the plug has a chamfered portion.

3. A plug according to Claim 2 comprising slots extending through it for further control of the flow characteristics.

4. A plug according to Claim 1 or Claim 3 comprising three slots in its surface.

5. A plug according to Claim 4 wherein the slots are equally spaced round the outside of the plug.

6. A plug according to any preceding claim comprising a main portion of approximately 4mm in length.
